# EUROPEAN PATENT SPECIFICATION

(11) **EP 1 132 882 B1**
(45) Date of publication and mention of the grant of the patent: **11.05.2005**
(21) Application number: 01302037.5
(22) Date of filing: 06.03.2001
(51) Int. Cl.: G09G 3/32

(54) **Active driving circuit for display panel**
Aktive Steuereinrichtung für eine Anzeigetafel
Circuit de commande active pour un panneau d'affichage

(30) Priority: 06.03.2000 KR 2000011056
(43) Date of publication of application: 12.09.2001
(73) Proprietor: LG ELECTRONICS INC., Seoul (KR)
(72) Inventor: Kim, Hak Su, Seoul (KR); Kwon, Oh Kyong, Songpa-gu, Seoul (KR); Na, Young Sun, Seoul (KR)
(74) Representative: McLeish, Nicholas Alistair Maxwell

(56) References cited:
- WO-A-99/48078
- WO-A-99/65012
- US-A- 6 023 259
- PATENT ABSTRACTS OF JAPAN vol. 2000, no. 01, 31 January 2000 (2000-01-31) -& JP 11 282419 A (NEC CORP), 15 October 1999 (1999-10-15) -& US 6 091 203 A 18 July 2000 (2000-07-18)

## Description

### BACKGROUND OF THE INVENTION

### 1. Field of the Invention

The present invention relates to an active driving circuit for a display panel.

### 2. Description of the Related Art

Recently, the field of flat displays is rapidly developing. Flat display devices that started to develop based on a liquid crystal display (LCD) have been ahead of a cathode ray tube (CRT) mostly used for several decades in the display field.

Various display devices such as a plasma display panel (PDP), a visual fluorescent display (VFD), a field emission display (FED), a light emitting diode (LED), and electroluminescence (EL) have been recently developed.

A driving method of the above display devices is divided into a passive driving method and an active driving method. The passive driving method is based on a simple matrix while the active driving method is based on a thin film transistor (TFT) LCD.

However, the simple matrix display device is driven by a scan driving method, and scan time that can drive the display device is limited. To obtain desired luminance, a high voltage is required. This gives an adverse effect to life span of the display device.

A driving circuit for the TFT-LCD applies a data line signal and a scan line signal to a liquid crystal panel having a driving circuit arranged in a crossing point of a gate line and data lines, thereby driving each pixel.

Each pixel includes a plurality of TFTs, a memory capacitor, and a display device. The TFTs are connected with the scan line and the data line. The memory capacitor and the display device are respectively connected with common terminals of the TFTs in parallel.

The transistors are used for switching and driving functions in accordance with signals applied from the scan line and the data line, so that a voltage is stored in the capacitor and the display device is driven by the stored voltage.

An active driving circuit for the aforementioned display panel will be described with reference to the accompanying drawings.

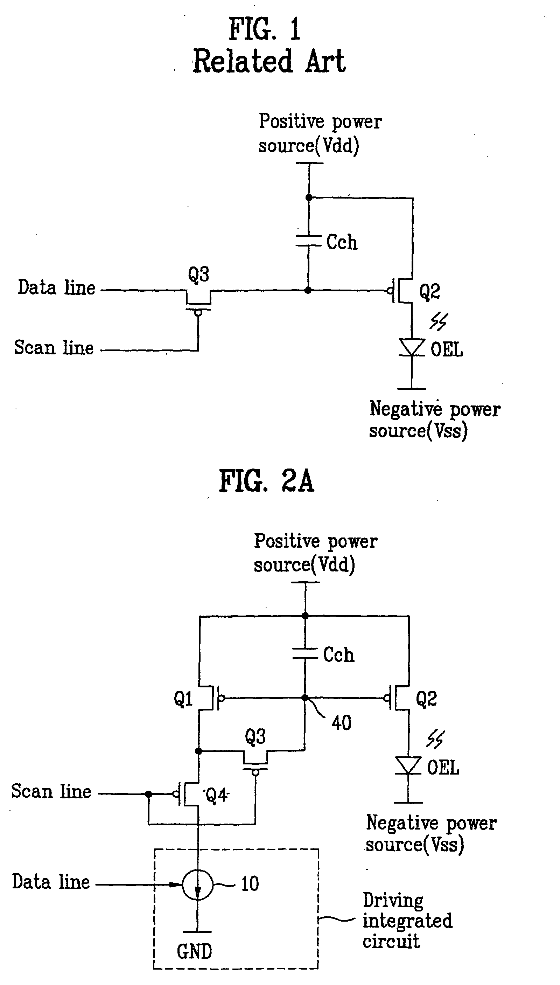

Fig. 1 is a diagram showing a related art active driving circuit for a display panel based on two active devices.

As shown in Fig. 1, two active devices, PMOS transistors Q2 and Q3 are arranged within each pixel.

Meanwhile, a constant positive voltage is applied to the PMOS transistor Q3 through the data line. In applying a voltage of the data line to a charge storage capacitor Cch within the driving circuit and the PMOS transistor Q2, the scan line controls the PMOS transistor Q3 that acts as a switch.

In more detail, the related art driving circuit includes a PMOS transistor Q2 connected with a positive power source Vdd, the charge storage capacitor Cch, and a display device such as opto electro luminescence (OEL) to directly drive the OEL. The charge storage capacitor Cch is connected to the positive power source Vdd.

Meanwhile, an anode of the OEL is connected with the driving PMOS transistor Q2 and its cathode is connected with a negative power source Vss.

The operation of the aforementioned related art active driving circuit for display panel will be described below.

If a gray voltage is applied from the data line, the gray voltage is input to the charge storage capacitor Cch and a control terminal of the driving PMOS transistor Q2, i.e., a gate, through the switching PMOS transistor Q3.

A current corresponding to a positive voltage of the capacitor Cch is supplied to the OEL through the driving PMOS transistor Q2. Brightness of the OEL is controlled by the data line signal.

Meanwhile, the switching PMOS transistor Q3 is controlled by the scan line signal.

As described above, brightness of each pixel is controlled by a voltage from the data line. Respective pixels constitute one screen.

However, the related art driving circuit for a display panel has several problems.

First, if a deviation occurs in a threshold voltage of the driving PMOS transistor, it is difficult to effectively solve the deviation. Moreover, even if the deviation can be controlled, the deviation should be measured in detail for compensation.

Furthermore, if a deviation occurs in the charge storage capacitor, a problem arises in that it is difficult to solve the deviation.

JP 11 282419 discloses an apparatus for driving multiple active elements with variable drive current, the apparatus includes a first and second switching means, a voltage holding means and a conversion transistor, the conversion transistor converting a control current into a control voltage when the first and second switching means are switched on by application of a control signal.

WO 99 65012 discloses an apparatus for driving active elements in an electroluminescent display device comprising a current mirror circuit which is operable to sample and store a drive signal that determines the display element drive current.

WO 99 48078 discloses apparatus for driving the elements of a display panel comprising a driving transistor, a compensating transistor, switching means, resetting means and capacitive means.

US 6 023 259 discloses a non capacitative current driver for gray-scale active matrix organic display devices comprising a single transistor, operable by pulses produced by pulse width modulation, and a diode that resets the display device voltage prior to the next data pulse.

EP-A-0 942 407 discloses an organic EL display device having a diode connected with the cathode to the anode of the organic EL device and with the anode to the cathode of the organic EL device.

### SUMMARY OF THE INVENTION

Accordingly, it would be desirable to provide an active driving circuit for a display panel in which a deviation of a threshold voltage can automatically be compensated.

It would also be desirable to provide an active driving circuit for a display panel in which a deviation of a threshold voltage of a transistor for driving a display panel can be minimized.

It would also be desirable to provide an active driving circuit for a display panel in which a display device can stably be operated. An active driving circuit for a display panel according to one aspect of the present invention is set out in claim 1.

The second transistor has a common gate terminal together with the first transistor and is turned on by a common gate signal applied to the common gate terminals to supply the positive power source to a display device.

The active driving circuit for a display panel according to the present invention further includes a third transistor, a constant current source, a capacitor, and a fourth transistor. The third transistor sets a saturated threshold voltage for the common gate terminal by allowing the first transistor to act as a diode by a scan line signal. The constant current source supplied a current with a ground one side and controlled by a gray signal of a data line. The fourth transistor is turned on by the scan line signal subsequent to the third transistor and controls a voltage of the common gate terminal corresponding to the controlled current of the constant current source by the scan line signal. The capacitor accumulates charges corresponding to the difference between the positive power source and the common gate voltage.

Preferably, the first and second transistors constitute a mirror circuit when they are turned on, thereby compensating a deviation of a threshold voltage. The capacitor uniformly accumulates charges in accordance with characteristics of the positive power source and the mirror circuit. Preferably, the constant current source supplies the current controlled by the gray signal using a current programming mode to generate a voltage difference in the common gate terminal. Preferably, thetransistors constituting a mirror circuit are differently fabricated at a constant ratio to control a driving current applied to the display device. Preferably, a voltage control device is used so as not to lower an anode electrode of the display device below a constant voltage. Preferably, a driving integrated circuit which includes a constant current source that acts to control a current is additionally provided to compensate a deviation of threshold voltages generated in the transistors.

It is to be understood that both the foregoing general description and the following detailed description are exemplary and explanatory and are intended to provide further explanation of the invention as claimed.

### BRIEF DESCRIPTION OF THE DRAWINGS

By way of example only, there now follows a detailed description of embodiments made with reference to the accompanying drawings, in which:
Fig. 1 is a circuit diagram showing a related art driving circuit for a display panel based on two active devices;
Fig. 2A is a circuit diagram showing a related art driving circuit for a display panel based on four active devices;
Fig. 2B is a diagram showing an active driving circuit when a third PMOS transistor of Fig. 2A is turned on;
Fig. 2C is a diagram showing an active driving circuit when the third PMOS transistor and a fourth PMOS transistor of Fig. 2A are turned on;
Fig. 2D is a diagram showing an active driving circuit when the third PMOS transistor and the fourth PMOS transistor of Fig. 2A are turned off;
Fig. 3 is a circuit diagram showing a related art driving circuit based on four active devices ; and
Fig. 4 is a circuit diagram showing a driving circuit based on four active devices according to the third embodiment of the present invention.

### DETAILED DESCRIPTION OF THE PREFERRED EMBODIMENTS

The following is a detailed description of a a related art active driving circuit for a display panel made with reference to the accompanying drawings.

Fig. 2A is a circuit diagram showing a related art driving circuit for a display panel based on four active devices.

Referring to Fig. 2A, the driving circuit includes a positive power source, Vdd, a capacitor Cch, first to fourth PMOS transistors Q1, Q2, Q3, and Q4, an OEL, a constant current source, and a negative power source Vss.

The first PMOS transistor Q1 includes a first signal terminal (source) connected with the positive power source Vdd, a gate, and a second signal terminal (drain).

The second PMOS transistor Q2 includes a gate connected with the gate of the first PMOS transistor Q1, a first signal terminal (source) connected with the positive power source Vdd, and a second signal terminal (drain) connected with the OEL.

The second PMOS transistor Q2 includes a mirror circuit against the first PMOS transistor Q1 and is turned on by a common gate signal applied to its gate so that the positive power source Vdd is supplied to the OEL.

The third PMOS transistor Q3 includes a first signal terminal connected with the second signal terminal of the first PMOS transistor Q1, a second signal terminal connected with the gates of the first and second PMOS transistors Q1 and Q2, and a gate connected with the scan line.

When the third PMOS transistor Q3 is turned on by the scan line signal (low signal), the first PMOS transistor Q1 is operated as a diode. Accordingly, a saturated threshold voltage Vth.Sat. for a common gate terminal of the first and second PMOS transistors Q1 and Q2 is set. At this time, the saturated threshold voltage is obtained by subtracting a voltage value Vgs between the gate and the source of the first PMOS transistor Q1 from a voltage of the positive power source Vdd. Meanwhile, when the third PMOS transistor Q3 is turned off by the scan line signal (high signal), the first PMOS transistor Q1 does not act as a mirror circuit any longer. Accordingly, the capacitor Cch and the second PMOS transistor Q2 only drive the OEL.

The constant current source 10 has a first grounded terminal and a second terminal opposite to the first terminal. The constant current source 10 supplies a current controlled by a gray signal of the data line. That is, the constant current source 10 serves to set a voltage value for controlling the amount of charges accumulated in the capacitor Cch so as to set the gray signal.

The fourth PMOS transistor Q4 includes a first signal terminal connected with the second signal terminal of the first PMOS transistor Q1, a second signal terminal connected with the second terminal of the constant current source 10, and a gate connected with the scan line.

The fourth PMOS transistor Q4 is turned on by the scan line signal (low signal) with certain time difference subsequent to the third PMOS transistor. Accordingly, the common gate voltage corresponding to the controlled current of the constant current source 10 is applied to the gates of the first and second PMOS transistors Q1 and Q2. Meanwhile, when the fourth PMOS transistor Q4 is turned off by the scan line signal (high signal), the first PMOS transistor Q1 does not act as a mirror circuit against the second PMOS transistor Q2.

The capacitor Cch is connected between the positive power source Vdd and the gates of the first and second PMOS transistors Q1 and Q2.

Meanwhile, the capacitor Cch accumulates charges corresponding to the difference between the positive power source Vdd and the common gate voltage applied to the gates of the first and second PMOS transistors Q1 and Q2.

The configuration of Fig. 2A will now be described in more detail.

As described above, the capacitor Cch is connected with the positive power source and accumulates a small amount of charges. Meanwhile, the first PMOS transistor Q1 and the second PMOS transistor Q2 constitute the mirror circuit against each other, and apply a current for the positive power source Vdd to the OEL while they are turned on by the common gate voltage applied to the common gate terminal.

The constant current source 10 controls the size of the common gate voltage applied to the common gate terminal of the first and second PMOS transistors Q1 and Q2 by the gray signal from the data line.

The third and fourth PMOS transistors Q3 and Q4 are sequentially turned on by a scan signal from the scan line at a constant time interval. The current controlled by the constant current source 10 determines a voltage of the common gate terminal 40 of the first and second PMOS transistors Q1 and Q2. Charges are accumulated in the capacitor Cch depending on the controlled current of the constant current source 10.

The positive power source Vdd is connected with source terminals of the first and second PMOS transistors Q1 and Q2. The capacitor Cch is serially connected with the positive power source Vdd and also is serially connected with the common gate terminal 40 of the first and second PMOS transistors Q1 and Q2.

The second PMOS transistor Q2 is connected with an anode of the OEL and the negative power source Vss is connected with a cathode of the OEL.

The first signal terminal of two signal terminals from the third PMOS transistor Q3 is connected with the common gate terminal 40 and the capacitor Cch.

Meanwhile, the first signal terminal of the fourth PMOS transistor Q4 is connected with the drain of the first PMOS transistor Q1 while its second signal terminal is connected with the driving integrated circuit which includes the constant current source.

The constant current source 10 included in the driving integrated circuit is controlled by a current programming mode that acts to control the amount of the current through the gray signal from the data line.

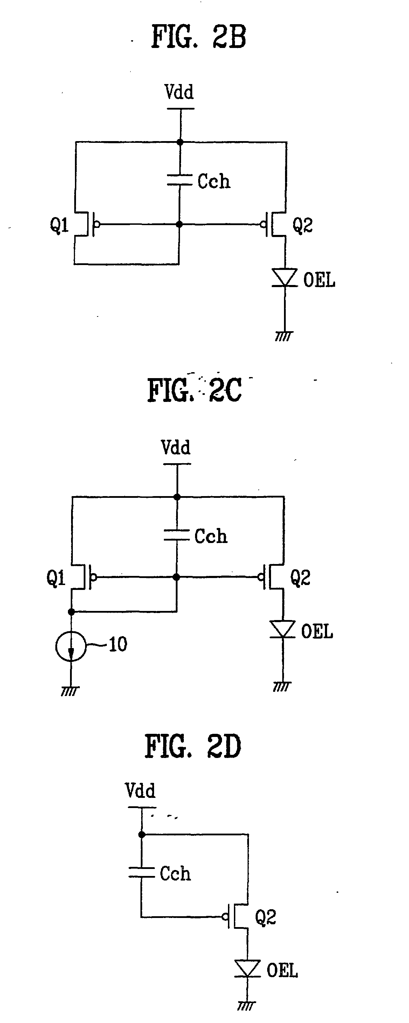

The operation of the active driving circuit shown in Fig. 2A will be described with reference to Figs. 2B to 2D.

Fig. 2B is a diagram showing the active driving circuit when a third PMOS transistor of Fig. 2A is turned on, Fig. 2C is a diagram showing the active driving circuit when the third PMOS transistor and a fourth PMOS transistor of Fig. 2A are turned on, and Fig. 2D is a diagram showing the active driving circuit when the third PMOS transistor and the fourth PMOS transistor of Fig. 2A are turned off.

The constant current source 10 controls a constant current Iset in accordance with the gray signal of the data line and supplies the controlled current to the common gate terminal 40 of the first and second PMOS transistors Q1 and Q2 having the mirror circuit to the first PMOS transistor Q1. Then, a constant voltage difference occurs in the common gate terminal 40. In other words, the voltage difference corresponding to the difference between the saturated gate threshold voltage and the gate threshold voltage of the controlled current occurs.

Meanwhile, if the first PMOS transistor Q3 is turned on by the low signal from the scan line, a positive current corresponding to the positive power source Vdd flows to the first PMOS transistor Q1. The first PMOS transistor Q1 is operated as a diode as shown in Fig. 2b. Accordingly, a value obtained by subtracting the source-gate voltage value Vgs of the first PMOS transistor Q1 from the voltage of the positive power source Vdd is applied to the common gate terminal 40 as the saturated gate threshold voltage.

Subsequently, following the third PMOS transistor Q3, if the fourth PMOS transistor Q4 is turned on by the scan line signal (low signal), as shown in Fig. 2C, the common gate terminal 40 is connected with the constant current source 10. The common gate threshold voltage of the common gate terminal 40 is varied in proportional to the controlled current of the constant current source 10. If the current value of the constant current source 10 is controlled, the saturated common gate terminal voltage becomes lower than the original level value by the controlled current. Accordingly, the common gate terminal voltage which controls the amount of the charges of the capacitor to set a desired gray signal is set by the circuit of Fig. 2C.

As described above, since the first and second PMOS transistors Q1 and Q2 constitute a mirror circuit, the voltage applied to the gate terminal of the first PMOS transistor Q1 becomes lower by the controlled current in the same manner as the voltage applied to the gate terminal of the second PMOS transistor Q2.

Meanwhile, since the control terminal of the first PMOS transistor Q1 is connected with the second signal terminal of the third PMOS transistor Q3, the first PMOS transistor Q1 is operated as the diode and the voltage of the common gate terminal 40 is uniformly maintained.

Thus, charges corresponding to the difference between the voltage of the common gate terminal 40 and the voltage of the positive power source Vdd are accumulated in the charge storage capacitor Cch. At this time, charges according to characteristic of the first and second PMOS transistors Q1 and Q2 are accumulated in the charge storage capacitor Cch.

On the other hand, if the signal applied from the scan line is transited to high state, the fourth PMOS transistor Q4 and the third PMOS transistor Q3 are turned off. At this time, the circuit of Fig. 2A is transited to the circuit of Fig. 2D. That is, only the second PMOS transistor Q2 and the charge storage capacitor Cch act on the driving of the OEL.

Therefore, the second PMOS transistor Q2 supplies a constant current to the OEL, and the OEL is light-emitted by the supplied current.

Finally, brightness of the OEL can uniformly be maintained because the second PMOS transistor Q2 has the same gate threshold voltage as that of the first PMOS transistor Q1. In other words, it is possible to prevent brightness change of the OEL resulting from different threshold voltages of 0.6V∼0.8V.

Meanwhile, brightness (intensity of light) of the OEL can be controlled by controlling the size of the negative power source Vss connected with the cathode terminal of the OEL.

The OEL may be an active matrix organic electroluminescence (AMOEL). The AMOEL is operated at a very low current level. Accordingly, the active driving circuit for a display panel is easy to control the AMOEL.

It is possible to control a ratio of the controlled current of the constant current source 10 to the current of the OEL by controlling a ratio of the width/length of the first and second PMOS transistors Q1 and Q2.

For example, when the ratio of width/length of the first PMOS transistor Q1 to the second PMOS transistor Q2 is set at 10:1, the size of the current of the OEL can be set at 1nA if the controlled current of the constant current source 10 has a size of 10nA. Alternatively, the width/length of the first PMOS transistor Q1 to the second PMOS transistor Q2 may be set at various ratios. In such case, a current ratio of the constant current source 10 to the OEL is varied depending on the width/length.

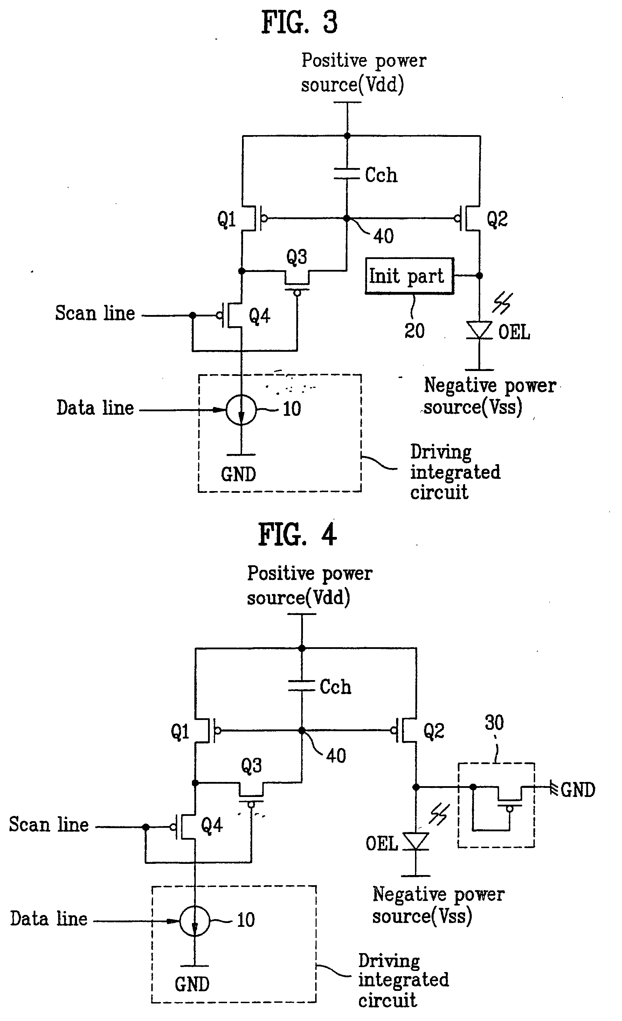

Fig. 3 is a circuit diagram showing the driving circuit based on four active devices according to an alternative arrangement.

Referring to Fig. 3, to obtain fast response time of the OEL, an init 20 is additionally provided as another current supply source that initially supplies a constant current to the OEL. The init 20 can improve delayed response time when a very low current is used to drive the OEL.

Other elements except for the init 20 are equal to those of Fig. 2A and thus their detailed description will be omitted.

Fig. 4 is a circuit diagram showing the driving circuit based on four active devices according to the embodiment of the present invention.

Referring to Fig. 4, a diode 30 for protecting a voltage is additionally provided at the anode of the OEL. The diode 30 is connected between the second PMOS transistor Q2 and the OEL in parallel.

When the negative power source Vss is lowered below a ground value, the diode 30 acts to prevent the anode of the OEL from being lowered below the ground value. Accordingly, voltage drop of the first PMOS transistor Q1 is avoided, and error operation of the second PMOS transistor Q2 is avoided.

As aforementioned, the active driving circuit for a display panel according to the present invention has the following advantages.

. First, it is possible to control the amount of the current of the OEL with a digital signal. In other words, it is possible to easily control the amount of the current of the OEL for each unit of mode or current level.

Second, since luminance of the OEL is controlled using the current, it is possible to easily integrate the active driving circuit for the OEL.

Third, since the current is controlled by a programming mode, it is possible to easily control a very small current level when the OEL based on the current driving mode is driven.

Finally, it is possible to improve response and luminance characteristics of the OEL by initially applying the current to the OEL based on the current driving mode.

The foregoing embodiment is merely exemplary and is not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A driving circuit for a display panel comprising
a plurality of scan lines for supplying a scan line signal,
a plurality of data lines for supplying a gray signal, and
a matrix of electroluminescent elements (OEL) , of which at least one element (OEL) has a cathode connected with a negative voltage source (Vss), and an anode;
the driving circuit comprising at least one circuit for driving the electroluminescent element (OEL);
said at least one circuit comprises:
a first transistor (Q1) having a first signal terminal connected in operation to a positive voltage source (Vdd);
a second transistor (Q2) having a common gate terminal (40) together with the first transistor, a first signal terminal connected in operation to the positive voltage source (Vdd), and a second signal terminal connected in operation to the anode of an electroluminescent element (OEL), and a mirror circuit against the first transistor (Q1), and being adapted to be turned on by a common gate signal applied to the common gate terminal to supply a positive voltage to the electroluminescent element (OEL);
a third transistor (Q3) having a first signal terminal connected to a second signal terminal of the first transistor (Q1), a second signal terminal connected to the common gate terminal (40), and a gate connected in operation to one of the scan lines for setting a saturated threshold voltage for the common gate terminal (40) by allowing the first transistor (Q1) and the second transistor (Q2) to constitute a mirror circuit against each other when it is turned on by a scan line signal;
a constant current source (10) for supplying a current and being arranged to be controlled by a gray signal of one of the data lines, said constant current source including a first terminal connected to a ground potential source (GND);
a fourth transistor (Q4) having a first signal terminal connected to the second signal terminal of the first transistor (Q1), a second signal terminal connected to a second terminal of the constant current source (10), and a gate connected in operation to the one of the scan lines, and being arranged to be turned on by the scan line signal subsequent to the third transistor (Q3), for supplying the common gate voltage corresponding to the controlled current of the constant current source (10);
a capacitor (Cch) connected to the common gate terminal (40) and, in operation, to the positive voltage source (Vdd) for accumulating charges corresponding to the difference between the positive voltage source (Vdd) and the common gate voltage; and
a diode (30), the cathode of said diode (30) being connected to the second terminal of the second transistor (Q2) and the anode of said diode (30) being connected in operation to the ground potential source (GND) for preventing the voltage at the second signal terminal of the second transistor from being lowered below a constant voltage due to the negative voltage applied to the cathode of the electroluminescent element (OEL).

2. The driving circuit according to claim 1, wherein the first to fourth transistors are PMOS or NMOS transistors.

3. The driving circuit according to claim 1, wherein the negative power source connected with the cathode of the electroluminescent element (OEL) device is adapted to control the intensity of light emitted from the electroluminescent element (OEL).

4. The driving circuit for a display panel of claim 1, wherein the electroluminescent element (OEL) is an active matrix organic electroluminescent element (AMOEL).

5. The driving circuit for a display panel of claim 1, wherein a ratio of the quotient of width and length of the first transistor (Q1) to the quotient of width and length of the second transistor (Q2) is proportional to a ratio of a current supplied to the electroluminescent element (OEL) to the controlled current of the constant current source (10).

6. The driving circuit for a display panel of claim 1, wherein the constant current source (10) is included in a driving integrated circuit.

7. A display panel comprising a driving circuit according to any preceding claim.

## Patentansprüche

1. Ansteuerschaltung für ein Anzeigefeld, umfassend
mehrere Scanleitungen zum Zuführen eines Scanzeilensignals,
mehrere Datenleitungen zum Zuführen eines Grauwertsignals, und
eine Matrix aus elektrolumineszenten Elementen (OEL), von denen mindestens ein Element (OEL) eine Kathode, die an eine negative Spannungsquelle (Vss) angeschlossen ist, sowie eine Anode aufweist;
wobei die Ansteuerschaltung mindestens eine Schaltung zum Ansteuern des elektrolumineszenten Elements (OEL) umfasst;
und wobei die mindestens eine Schaltung Folgendes umfasst:
einen ersten Transistor (Q1), der einen ersten Signalanschlusspunkt aufweist, welcher im Betrieb an eine positive Spannungsquelle (Vdd) angeschlossen ist;
einen zweiten Transistor (Q2), der einen gemeinsamen Gateanschlusspunkt (40) aufweist, den er sich mit dem ersten Transistor teilt, sowie einen ersten Signalanschlusspunkt, der im Betrieb an die positive Spannungsquelle (Vdd) angeschlossen ist, sowie einen zweiten Signalanschlusspunkt, der im Betrieb an die Anode eines elektrolumineszenten Elements (OEL) angeschlossen ist, sowie eine Spiegelschaltung gegen den ersten Transistor (Q1), und der durch ein gemeinsames Gatesignal, das an den gemeinsamen Gateanschlusspunkt angelegt wird, angeschaltet werden kann, um dem elektrolumineszenten Element (OEL) eine positive Spannung zuzuführen;
einen dritten Transistor (Q3), der einen ersten Signalanschlusspunkt aufweist, welcher an einen zweiten Signalanschlusspunkt des ersten Transistors (Q1) angeschlossen ist, sowie einen zweiten Signalanschlusspunkt, welcher an den gemeinsamen Gateanschlusspunkt (40) angeschlossen ist, und ein Gate, das im Betrieb an eine der Scanleitungen angeschlossen ist, um für den gemeinsamen Gateanschlusspunkt (40) eine gesättigte Schwellenspannung einzustellen, indem es den ersten Transistor (Q1) und den zweiten Transistor (Q2) zueinander eine Spiegelschaltung bilden lässt, wenn es durch ein Scanzeilensignal eingeschaltet ist;
eine Konstantstromquelle (10) zur Stromzufuhr, die durch ein Grauwertsignal auf einer der Datenleitungen gesteuert werden kann, wobei die Konstantstromquelle einen ersten Anschlusspunkt aufweist, der an eine Erdungsquelle (GND) angeschlossen ist;
einen vierten Transistor (Q4), der einen ersten Signalanschlusspunkt aufweist, welcher an den zweiten Signalanschlusspunkt des ersten Transistors (Q1) angeschlossen ist, sowie einen zweiten Signalanschlusspunkt, welcher an einen zweiten Signalanschlusspunkt der Konstantstromquelle (10) angeschlossen ist, und ein Gate, welches im Betrieb an eine der Scanleitungen angeschlossen ist, und der durch ein Scanzeilensignal im Anschluss an den dritten Transistor (Q3) eingeschaltet werden kann, um die gemeinsame Gatespannung bereitzustellen, die dem kontrollierten Strom der Konstantstromquelle (10) entspricht;
einen Kondensator (Cch), der an den gemeinsamen Gateanschlusspunkt (40) sowie, im Betrieb, an die positive Spannungsquelle (Vdd) angeschlossen ist, um Ladungen anzusammeln, die der Differenz zwischen der positiven Spannungsquelle (Vdd) und der gemeinsamen Gatespannung entsprechen; und
eine Diode (30), wobei die Kathode der Diode (30) an den zweiten Anschlusspunkt des zweiten Transistors (Q2) angeschlossen ist, und wobei die Anode der Diode (30) im Betrieb an die Erdungsquelle (GND) angeschlossen ist, um zu verhindern, dass die Spannung am zweiten Signalanschlusspunkt des zweiten Transistors aufgrund der an die Kathode des elektrolumineszenten Elements (OEL) angelegten negativen Spannung unter einen konstanten Spannungswert abgesenkt wird.

2. Ansteuerschaltung gemäß Anspruch 1, wobei es sich bei den ersten bis vierten Transistoren um PMOSoder NMOS-Transistoren handelt.

3. Ansteuerschaltung gemäß Anspruch 1, wobei die negative Spannungsquelle, die an die Kathode des elektrolumineszenten Elements (OEL) angeschlossen ist, zur Steuerung der Intensität des Lichts, das von dem elektrolumineszenten Element (OEL) abgegeben wird, ausgelegt ist.

4. Ansteuerschaltung für ein Anzeigefeld gemäß Anspruch 1, wobei es sich bei dem elektrolumineszenten Element (OEL) um ein elektrolumineszentes Aktivmatrixelement (AMOEL) handelt.

5. Ansteuerschaltung für ein Anzeigefeld gemäß Anspruch 1, wobei das Verhältnis zwischen dem Breiten-Längen-Quotienten des ersten Transistors (Q1) und dem Breiten-Längen-Quotienten des zweiten Transistors (Q2) proportional ist zu dem Verhältnis zwischen dem Strom, der dem elektrolumineszenten Element (OEL) zugeführt wird, und dem kontrollierten Strom der Konstantstromquelle (10).

6. Ansteuerschaltung für ein Anzeigefeld gemäß Anspruch 1, wobei die Konstantstromquelle (10) in einer integrierten Ansteuerschaltung enthalten ist.

7. Anzeigefeld, umfassend eine Ansteuerschaltung gemäß einem der vorhergehenden Ansprüche.

## Revendications

1. Un circuit de commande pour un panneau d'affichage, comprenant :
une pluralité de lignes de balayage pour fournir un signal de ligne de balayage,
une pluralité de lignes de données pour fournir un signal de gris, et
une matrice d'éléments electroluminescents (OEL), dont au moins un élément (OEL) présente une cathode, reliée à une source de tension négative (Vss), et une anode ;
le circuit de commande comprenant au moins un circuit, pour commander l'élément electro-luminescent (OEL) ;
ledit au mois un circuit comprend :
un premier transistor (Q1), ayant une première borne de signal connectée en fonctionnement à une source de tension positive (Vdd) ;
un deuxième transistor (Q2), ayant une borne de grille commune (40) conjointement avec le premier transistor, une première borne de signal connectée en fonctionnement à la source de tension positive (Vdd), et une deuxième borne de signal connectée en fonctionnement à l'anode d'un élément electroluminescent (OEL), et un circuit de miroir par rapport au premier transistor (Q1), et étant adapté pour être mis en service par un signal de grille commune appliqué à la borne de grille commune pour fournir une tension positive à l'élément electroluminescent (OEL) ;
un troisième transistor (Q3), ayant une première borne de signal connectée à une deuxième borne de signal du premier transistor (Q1), une deuxième borne de signal connectée à la borne de grille commune (40) et une grille connectée en fonctionnement à l'une des lignes de balayage pour fixer une tension de seuil saturée pour la borne de grille commune (40), en faisant constituer, par le premier transistor (Q1) et le deuxième transistor (Q2), un circuit miroir par rapport à chaque autre, lorsqu'il est mis en service par un signal de ligne de balayage ;
une source de courant constant (10), pour fournir un courant et agencée pour être commandée par un signal de gris d'une des lignes de données, ladite source de courant constant comprenant une première borne, reliée à une source de potentiel de masse (GND) ;
un quatrième transistor (Q4), ayant une première borne de signal connectée à la deuxième borne de signal du premier transistor (Q1), une deuxième borne de signal connectée à une deuxième borne de la source de courant constant (10) et une grille connectée en fonctionnement à l'une des lignes de balayage, et agencé pour être mis en service par le signal de ligne de balayage subséquemment au troisième transistor (Q3), pour fournir la tension de grille commune correspondant au courant commandé de la source de courant constant (10) ;
un condensateur (Cch) connecté à la borne de grille commune (40) et, en fonctionnement, à la source de tension positive (Vdd), pour accumuler des charges correspondant à la différence entre la source de tension positive (Vdd) et la tension de grille commune ; et
une diode (30), la cathode de ladite diode (30) étant connectée à la deuxième borne du deuxième transistor (Q2) et l'anode de ladite diode (30) étant connectée en fonctionnement à la source de potentiel de masse (GND), pour empêcher que la tension à la deuxième de borne de signal du deuxième transistor soit abaissée au-dessous d'une tension constante dûe à la tension négative appliquée à la cathode de l'élément electro-luminescent (OEL).

2. Le circuit de commande selon la revendication 1 dans lequel les premier à quatrième transistors sont des transistors PMOS ou NMOS.

3. Le circuit de commande selon la revendication 1 dans lequel la source de puissance négative connectée à la cathode du dispositif à éléments électroluminescents (OEL) est adaptée pour commander l'intensité de la lumière émise par l'élément electro-luminescent (OEL).

4. Le circuit de commande pour un panneau d'affichage selon la revendication 1 dans lequel l'élément électro-luminescent (OEL) est un élément électro-luminescent organique à matrice active (AMOEL).

5. Le circuit de commande pour un panneau d'affichage selon la revendication 1, dans lequel le rapport du quotient, entre la largeur et la longueur du premier transistor (Q1), au quotient, entre la largeur et de la longueur du deuxième transistor (Q2), est proportionnel à un rapport, entre le courant, fourni à l'élément électro-luminescent (OEL), et le courant commandé de la source de courant constant (10).

6. Le circuit de commande pour un panneau d'affichage selon la revendication 1, dans lequel la source de courant constant (10) est incluse dans un circuit intégré de commande.

7. Un panneau d'affichage comprenant un circuit de commande selon l'une quelconque des revendications précédentes.
